(19) Europäisches Patentamt
European Patent Office
Office européen des brevets

(11) **EP 1 395 440 B1**

(12) **EUROPÄISCHE PATENTSCHRIFT**

(45) Veröffentlichungstag und Bekanntmachung des Hinweises auf die Patenterteilung:
**17.12.2014   Patentblatt 2014/51**

(51) Int Cl.:
**B42D 15/00** (2006.01)

(21) Anmeldenummer: **02740673.5**

(22) Anmeldetag: **31.05.2002**

(86) Internationale Anmeldenummer:
**PCT/EP2002/005987**

(87) Internationale Veröffentlichungsnummer:
**WO 2002/100656 (19.12.2002 Gazette 2002/51)**

(54) **DIFFRAKTIVES SICHERHEITSELEMENT**

DIFFRACTIVE SECURITY ELEMENT

ELEMENT DE SECURITE A DIFFRACTION

(84) Benannte Vertragsstaaten:
**AT BE CH CY DK ES FI FR GB GR IE IT LI LU MC NL PT SE TR**

(30) Priorität: **08.06.2001   DE 10127980**

(43) Veröffentlichungstag der Anmeldung:
**10.03.2004   Patentblatt 2004/11**

(73) Patentinhaber: **OVD Kinegram AG**
**6301 Zug (CH)**

(72) Erfinder:
• **SCHILLING, Andreas**
**CH-6332 Hagendorn (CH)**
• **TOMPKIN, Wayne, Robert**
**CH-5400 Baden (CH)**

(74) Vertreter: **Zinsinger, Norbert et al**
**Louis, Pöhlau, Lohrentz**
**Patentanwälte**
**Postfach 30 55**
**90014 Nürnberg (DE)**

(56) Entgegenhaltungen:
**EP-A- 0 766 103**

• **PATENT ABSTRACTS OF JAPAN vol. 018, no. 081 (P-1690), 9. Februar 1994 (1994-02-09) -& JP 05 289599 A (DAINIPPON PRINTING CO LTD), 5. November 1993 (1993-11-05)**
• **PATENT ABSTRACTS OF JAPAN vol. 018, no. 220 (M-1595), 20. April 1994 (1994-04-20) -& JP 06 015991 A (CANON INC), 25. Januar 1994 (1994-01-25)**

**Beschreibung**

Die Erfindung bezieht sich auf ein diffraktives Sicherheitselement gemäss dem Oberbegriff des Anspruchs 1.

Solche diffraktive Sicherheitselemente werden für die Beglaubigung der Echtheit eines Dokuments verwendet und zeichnen sich durch ein optisch variables Muster aus, das sich durch Drehen oder Kippen für den Beobachter in auffälliger Art und Weise vorbestimmt ändert.

Derartige diffraktive Sicherheitselemente sind aus vielen Quellen bekannt, stellvertretend sind hier die EP 0 105 099 B1, EP 0 330 738 B1, EP 0 375 833 B1 genannt. Sie zeichnen sich durch die Brillanz der Muster und den Bewegungseffekt im Muster aus, sind in ein dünnes Laminat aus Kunststoff eingebettet und werden in Form einer Marke auf Dokumente, wie Banknoten, Wertpapiere, Personalausweise, Pässe, Visa, Identitätskarten usw. aufgeklebt. Zur Herstellung der Sicherheitselemente verwendbare Materialien sind in der EP 0 201 323 B1 zusammengestellt.

Moderne Kopierer und Scanner - Einrichtungen sind in der Lage, ein solches Dokument scheinbar farbgetreu zu duplizieren. Die diffraktiven Sicherheitselemente werden mitkopiert, wobei die Brillanz und der Bewegungseffekt verloren gehen, so dass das beim Original unter einem einzigen vorbestimmten Blickwinkel sichtbare Muster mit den Druckfarben eines Farbkopieres abgebildet wird. Solche Kopien von Dokumenten können bei schlechten Lichtverhältnissen oder bei Unaufmerksamkeit leicht mit dem Original verwechselt werden. Die bekannten Sicherheitselemente weisen den Nachteil auf, dass die Kopien als solche für den Mann auf der Strasse nicht leicht erkennbar sind.

Aus der EP 0 490 457 B1 ist bekannt, dass in einem visuell erkennbaren Bild ein zweites, visuell nicht erkennbares Bild aus feinen Linienstücken eingebracht werden kann. Der Inhalt des zweiten Bilds ist in der Neigung der Linienstücke gegenüber den Linienstücken des Hintergrunds codiert. Beim Kopieren erscheint das zweite Bild über dem ersten Bild mit einer Schwärzung, die von den Neigungswinkeln der Linienstücke abhängig ist. Daher ist das zweite Bild von der Lage des Originals auf der Kopiermaschine abhängig. Theoretische Betrachtungen dazu sind in "Optical Document Security", van Renesse, Editor, ISDN Nummer 0-89006-982-4, Seiten 127 - 148 dargelegt.

Der Erfindung liegt die Aufgabe zugrunde, ein visuell erkennbares, kostengünstiges diffraktives Sicherheitselement mit einem optisch variablen Flächenmuster zu schaffen, das in einer von einem Farbkopierer erzeugten Kopie eine zweite, vom Flächenmuster unabhängige, versteckte Information aufweist.

Die genannte Aufgabe wird erfindungsgemäss durch die im Kennzeichen des Anspruchs 1 angegebenen Merkmale gelöst. Vorteilhafte Ausgestaltungen der Erfindung ergeben sich aus den abhängigen Ansprüchen.

Ausführungsbeispiele der Erfindung sind in der Zeichnung dargestellt und werden im folgenden näher beschrieben.

Es zeigen:

Figur 1     einen Querschnitt durch ein optisch variables Sicherheitselement,

Figur 2     einen Ausschnitt aus einem Flächenmuster,

Figur 3     einen Querschnitt durch eine optische Abtastvorrichtung,

Figur 4     Einheitszellen,

Figur 5     Bereiche des Flächenmusters,

Figur 6     eine Kopie einer Tafel im Flächenmuster,

Figur 7     einen Ausschnitt einer Kopie des Sicherheitselements und

Figur 8     eine Einheitszelle mit zirkularen Beugungsgittern.

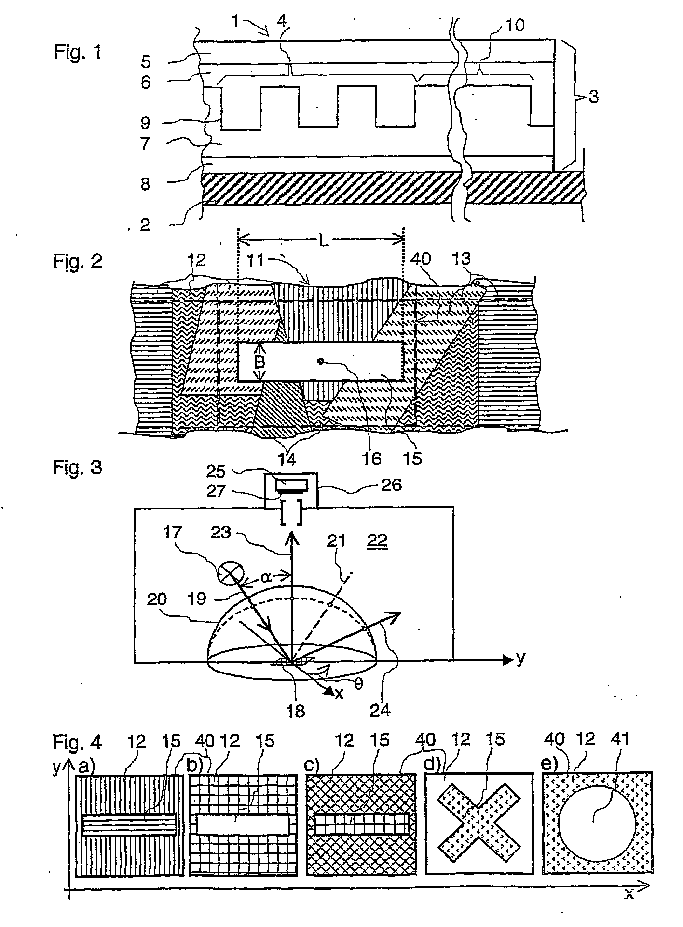

In der Figur 1 bedeutet 1 ein optisch variables Sicherheitselement, 2 ein Substrat, 3 einen Schichtverbund, 4 eine mikroskopisch feine Struktur, 5 eine Deckschicht, 6 eine Lackschicht, 7 eine Schutzlackschicht, 8 eine Klebeschicht, 9 eine Grenzschicht und 10 eine Spiegelfläche. Im gezeigten Querschnitt durch ein Dokument ist der Schichtverbund 3 des Sicherheitselements 1 mittels der Klebeschicht 8 mit dem Substrat 2 verbunden. Als Dokumente sind vor allem Ausweise, Banknoten, Visa, Wertpapiere, Eintrittkarten usw. gemeint, die als Substrat 2 für das Sicherheitselement 1 dienen und deren Echtheit durch das aufgeklebte Sicherheitselement 1 beglaubigt ist. Die mikroskopisch feinen, mechanisch oder holographisch erzeugten, optisch wirksamen Strukturen 4 sind in einem Schichtverbund 3 aus Kunststoff eingebettet. Beispielsweise besteht der Schichtverbund 3 in der angegebenen Reihenfolge aus der glasklaren, transparenten Deckschicht 5. Unter der Deckschicht 5 ist eine transparente Lackschicht 6 angeordnet, in die die mikroskopisch feine, optisch wirksame Struktur 4 abgeformt ist. Die Struktur 4 ist mit einer Schutzlackschicht 7 derart überdeckt, dass die Furchen der wirksamen Struktur 4 von der Schutzlackschicht 7 verfüllt sind und die wirksame Struktur 4 zwischen der Lackschicht 6 und der Schutzlackschicht 7 eingebettet ist. Zwischen dem Substrat 2 und der Schutzlackschicht 7 ist eine Klebeschicht 8 angeordnet, um den Schichtverbund 3 fest mit dem Substrat 2 zu verbinden. Die Schichten 5 und 6 bzw. 7 und 8 können in anderen Ausführungen jeweils aus demselben Material bestehen, so dass eine Grenzfläche zwischen den Schichten 5 und 6 bzw. 7 und 8 entfällt. Die wirksame Struktur 4 bestimmt eine Grenzfläche 9 zwischen den Schichten 6 und 7. Die optische Wirksamkeit der Grenzfläche 9 steigt mit der Differenz der Brechungsindices der Materialien in den beiden angrenzenden Schichten, der Lackschicht 6 und der Schutzlackschicht 7. Zur Verstärkung der optischen Wirksamkeit der Grenzfläche 9 ist die optisch wirksame Struktur 4 vor dem Aufbringen der Schutzlackschicht 7 mit einer im Vergleich zu den Tiefen der Furchen dünnen, metallischen oder dielektrischen Reflexionsschicht überzogen. Andere Ausführungen des Schichtverbunds 3 und die für transparenten oder nichttransparenten Sicherheitselemente 9 verwendbaren Materialien sind in der eingangs erwähnten EP 0 201 323 B1 beschrieben. Die in der Figur 1 gezeigte Struktur 4 ist nur symbolisch als einfache Rechteckstruktur gezeichnet und steht für allgemeine, optisch wirksame Strukturen 4, wie lichtbeugende Reliefstrukturen, lichtstreuende Reliefstrukturen oder Spiegelflächen 10 (Fig. 1). Bekannte lichtbeugende Reliefstrukturen sind lineare oder zirkulare Beugungsgitter und Hologramme. Die lichtstreuenden Reliefstrukturen sind beispielsweise Mattstrukturen.

In der Figur 2 ist ein im Ausschnitt dargestelltes Sicherheitselement 1 (Fig. 1) gezeigt. Durch die Deckschicht 5 (Fig. 1) hindurch erkennt ein Beobachter aus vorbestimmten Beobachtungsrichtungen visuell die Wirkung der optisch wirkenden Struktur 4 (Fig. 1) eines Flächenmusters 11. Das Flächenmuster 11 ist ein Mosaik aus vielen Flächenelementen 12, 13, 14, in die optisch wirksamen Strukturen 4 abgeformt sind. Für den Beobachter sind jeweils nur die beugungsoptisch wirksamen Flächenelemente 12, 13, 14 sichtbar, die das auf ihre optisch wirksamen Strukturen 4 einfallende Licht in das Auge des Beobachters ablenken. Durch Drehen oder Kippen des Sicherheitselements 1 um eine seiner drei Achsen werden andere Flächenelemente 12, 13, 14 sichtbar und verändern das durch die optische Wirkung des Flächenmusters 11 erkennbare Bild.

Unabhängig von den Flächenelementen 12, 13, 14 sind in den optisch wirksamen Strukturen 4 in wenigstens einem Teil des Flächenmusters 11 eine Vielzahl von Teilflächen 15 mit je einem Schwerpunkt 16 regelmässig so angeordnet, dass die Schwerpunkte 16 einen Punktraster bilden. In die Teilflächen 15 sind andere optisch wirksame Strukturen 4 abgeformt. Die Einteilung der Flächenelemente 12, 13, 14 ist in der Zeichnung der Figur 2 nur beispielhaft dargestellt und zeigt nur die Unabhängigkeit der Teilfläche 15 vom Flächenmuster 11. In Wirklichkeit sind die Flächenelemente 12 bis 14 meist viel grösser als die Teilflächen 15. Die Teilflächen 15 sind identisch und weisen eine längliche Form auf, wobei das Verhältnis von Länge L zu Breite B wenigstens drei beträgt, also $L/B \geq 3$. Die grösste Abmessung, d.h. die Länge L, ist kleiner als 0.2 mm, z.B. 0.170 mm. Damit sind die Abmessungen so klein, dass die Teilfläche 15 im Flächenmuster 11 bei einer Betrachtungsdistanz von 30 cm gerade nicht mehr vom blossen Auge erkennbar ist, d.h. der Beobachter erkennt beim Drehen und Kippen nur einen Hintergrund mit den von der Beobachtungsrichtung abhängigen Bildern des Flächenmusters 11, die von den Flächenelementen 12 bis 14 erzeugt werden.

Beim Kopieren mit einem digitalen Farbkopierer werden nur die Teilflächen 15 registriert, die quer zur Abtaststrichtung des Farbkopierers orientiert sind. Werden die Teilflächen 15 regelmässig auf dem Flächenmuster 11 angeordnet, kann jeder Teilfläche 15 eine Einheitszelle 40 eines Punktrasters in Rechteck - oder Sechseck - Form zugeordnet werden, wobei der Schwerpunkt 16 mit dem Diagonalenschnittpunkt der Einheitszelle 40 zusammenfällt. Die Einheitszelle 40 ist in der Figur 2 gestrichelt gezeichnet, da diese Einteilung lediglich zum besseren Verständnis eingezeichnet ist. Ein von der Teilfläche 15 nicht eingenommener Flächenanteil der Einheitszelle 40 enthält einen Anteil des Flächenmusters 11, z.B. vom Flächenelement 12. Jede Einheitszelle 40 ist ein Pixel einer im originalen Flächenmuster 11 mit dem blossen Auge nicht sichtbaren, versteckten Information, die aber in einer Farbkopie deutlich sichtbar ist.

Ein Vorteil vorliegender Erfindung ist die hohe Reproduzierbarkeit der Anordnung der Teilflächen 15 im Flächenelement 11 mittels Abformen der optisch wirksamen Strukturen 4 in einem Arbeitsgang in die Lackschicht 6 (Fig. 1). Im Sicherheitselement 1 sind die Teilflächen 15 unter der Deckschicht 5 angeordnet und daher vor mechanischen und/oder chemischen Angriffen geschützt.

In der Figur 3 ist ein Querschnitt durch eine digitale, optische Abtastvorrichtung (= Scanner) eines Farbkopierers schematisch dargestellt. Eine mittels einer Weisslichtquelle 17 in einem schmalen Streifen beleuchtete Fläche 18 liegt in einer von Koordinatenrichtungen x und y aufgespannten Ebene. Die Fläche 18 ist Teil des Flächenmusters 11 (Fig. 2) bzw. der Teilfläche 15 (Fig. 2). Wenigstens ein Teil des auf die Fläche 18 einfallenden Lichtstrahls 19 wird in einen Halbraum 20 über der beleuchteten Fläche 18 zurückgeworfen. Ist die Fläche 18 eine Spiegelfläche, so wird das einfallende Licht hauptsächlich nach dem Reflexionsgesetz als Reflexionsstrahl 21 zurückgeworfen. Die Richtung des einfallenden Lichtstrahls 19 und der Reflexionsstrahl 21 spannen eine Beugungsebene 22 auf. Die Beugungsebene 22 schneidet den als Halbkugel dargestellten Halbraum 20 in einem gestrichelt gezeichneten Grosskreis und steht senkrecht auf der Fläche 18. Die Fläche 18 ist mit einem Beugungsgitter belegt, dessen hier nicht gezeigter Gittervektor in der Beugungsebene 22 liegt und zur Koordinatenrichtung y, d.h. zur Abtaststrichtung, ausgerichtet ist, wobei der Gittervektor einen zur Koordinatenrichtung x gemessenen Azimut $\theta$ von 90° bzw. 270° aufweist. Das am Beugungsgitter gebeugte Licht wird in Spektralfarben aufgespalten und in der Beugungsebene 22 in zum Reflexionsstrahl 21 symmetrischen

**EP 1 395 440 B1**

Richtungen 23, 24 abgelenkt. Die Spatialfrequenz f und die Wellenlänge λ des gebeugten Lichts bestimmen den Beugungswinkel zwischen dem Reflexionsstrahl 21 und den Richtungen 23 bzw. 24. Im gezeigten Beispiel steht die Richtung 23 senkrecht auf der Fläche 18. Die Parameter des Beugungsgitters sind so zu wählen, dass der Lichtstrahl 19 für eine vorbestimmte Spektralfarbe in die Richtung 23, der Normalen zur Fläche 18, gebeugt und von einem Lichtempfänger 26 registriert wird. Weicht der Gittervektor vom Azimut θ = 90° bzw. 270° ab und/oder das gebeugte Licht gelangt nicht in den Lichtempfänger 26, wird die Fläche 18 vom Farbkopierer wegen des an der optisch wirksamen Struktur 4 (Fig. 1) gestreuten Lichts in einem dunklen Grauton wiedergegeben. Weist das Beugungsgitter eine sehr hohe Liniendichte (> 2'500 Linien/mm) auf, kann dessen erste Ordnung nicht mehr in den Halbraum 20 abgestrahlt werden, jedoch verhält sich das Beugungsgitter wie ein farbiger Spiegel, und wird im Farbkopierer als schwarz registriert, da kein Licht in den Lichtempfänger 26 fällt. Weist die Fläche 18 eine Mattstruktur auf, wird das einfallende weisse Licht 19 ohne spektrale Aufspaltung in den ganzen Halbraum 20 gestreut und vom Farbkopierer entsprechend der Intensität als weiss oder grau registriert. Im Gegensatz zu einer isotropen Mattstruktur lenkt eine anisotrope Mattstruktur das einfallende Licht 19 bevorzugt in einen vorbestimmten Raumwinkelbereich ab. Die anisotrope Mattstruktur ermöglicht die Wiedergabe von Grauwerten. Absorbiert die Fläche 18 das einfallende Licht 19, wird in den Halbraum 20 kein Licht zurückgeworfen. Der Einfallswinkel der Lichtstrahlen 19 auf die Fläche 18 weist einen Wert im Bereich von 25° bis 30° auf und ist typisch für den Hersteller des Farbkopierers.

Moderne Farbkopierer mit digitaler Abtastung, nachfolgend Farbkopierer genannt, besitzen eine Auflösung von wenigstens 12 Punkten/mm (= 300 dpi) in jeder der kartesischen Koordinatenrichtung x und y. Die Weisslichtquelle 17 sendet die Lichtstrahlen 19 parallel zur gezeichneten Beugungsebene 22 schief auf die Fläche 18 und beleuchtet die Fläche 18 in dem längs der Koordinatenrichtung x ausgerichteten schmalen Streifen. Alles Licht, das in der Richtung 23 zurückgeworfen wird, gelangt in einen von einer Vielzahl von Photodetektoren 25 des Lichtempfängers 26. In der Zeichnung der Figur 3 ist der Lichtempfänger 26 schematisch im Schnitt gezeigt. In der Koordinatenrichtung x dehnen sich der beleuchtete schmale Streifen und der Lichtempfänger 26 über die ganze Breite einer Auflage für die zu kopierenden Substrate 2 (Fig. 1), beispielsweise eines A4 bzw. A3 Blattes aus. Für jede der drei Grundfarben sind wenigstens 12 Photodetektoren 25 pro Millimeter angeordnet. Zum digitalen Abtasten bewegen sich die Weisslichtquelle 17 und der Lichtempfänger 26 schrittweise entlang der Koordinatenrichtung y. Bei jedem Schritt wird ein im Lichtempfänger 26 auf lichtempfindlichen Oberflächen 27 der Photodetektoren 25 registriertes Abbild des auf der Fläche 18 beleuchteten schmalen Streifens punktweise von den Photodetektoren 25 abgetastet. Beim Auslesen des Abbilds werden von den Photodetektoren 25 Intensitätswerte der in Richtung 23 abgelenkten Lichtstrahlen 19 registriert.

Infolge der endlichen Auflösung im Lichtempfänger 26 hängt das registrierte Signal von der Ausrichtung der Teilflächen 15 relativ zur Abtastrichtung im Farbkopierer ab. Eine mögliche Ausführung des Farbkopierers unterdrückt das Signal eines einzelnen Photodetektors 25, falls benachbarte Photodetektoren stark abweichende Intensitätswerte registrieren, indem das abweichende Signal den benachbarten Werten angeglichen wird. Dies unterdrückt Störsignale. Dieses Verfahren wird für jede Grundfarbe unabhängig von den beiden anderen durchgeführt. Ähnliche Intensitätsvergleiche in der Koordinatenrichtung y finden nicht statt. Die Breite B der Teilfläche 15 (Fig. 2) bestimmt bis zu welcher Auflösung des Farbkopierers der nachstehend beschriebene Schutzeffekt wirksam ist. Wenn z.B. die Breite B = 0,04 mm bzw..0.02 mm beträgt, ist die Schutzwirkung beim Farbkopierer mit einer Auflösung bis zu 24 Punkten/mm (= 600 dpi) bzw. 48 Punkten/mm (= 1200 dpi) gegeben, da ein Signal der Teilfläche 15 bei einer Abtastung quer zur Längsausdehnung unterdrückt wird, weil nur ein einzelner Photodetektor 25 ein Signal für die Teilfläche 15 erzeugt. Ist hingegen die Teilfläche 15 mit ihrer Längsausdehnung parallel zur Koordinatenrichtung X ausgerichtet, erfasst der Farbkopierer die Teilfläche 15, da selbst bei einer niedrigen Auflösung von 12 Punkten/mm wenigstens zwei nebeneinanderliegende Photodetektoren 25 das Signal der Teilfläche 15 registrieren.

In den Figuren 4a bis 4e sind schematisch Einheitszellen 40 mit je einer darin angeordneten Teilfläche 15 dargestellt. Der von der Teilfläche 15 nicht belegte Flächenanteil der Einheitszelle 40 ist ein Teil der Flächenelemente 12 bis 14 (Fig. 2). Der Flächenanteil der Teilfläche 15 an der Einheitszelle 40 ist vorzugsweise weniger als 20 Prozent, da sonst die Flächenhelligkeit des Flächenelements 12 merklich abgeschwächt ist. Beispielhaft sind fünf Kombinationen der oben erwähnten optisch wirksamen Strukturen zusammengestellt, mit denen die Flächenelemente 12 und die Teilflächen 15 ausgerüstet sein können.

Im Beispiel a sind die Furchen des Beugungsgitters des Flächenelements 12 und die Furchen des Beugungsgitters der Teilflächen 15 senkrecht zueinander ausgerichtet, wobei die Ausrichtung der Furchen in der Teilfläche 15 immer parallel zur Koordinatenrichtung x ist, unabhängig von der Ausrichtung der Teilfläche 15 in der Einheitszelle 40. Wären (in einem nicht gezeigten Beispiel 4a.1) die Furchen des Beugungsgitters im Flächenelement 12 parallel zu den Furchen in der Teilfläche 15, würden sich die Beugungsgitter durch ihre Spatialfrequenz f unterscheiden.

Im Beispiel b ist die Teilfläche 15 mit einer Spiegelfläche 10 (Fig. 1) belegt, während das Flächenelement 12 als optisch wirksame Struktur (Fig. 1) ein Kreuzgitter aufweist. Das Kreuzgitter ist durch zwei Spatialfrequenzen f1 und f2 bestimmt, wobei die Spatialfrequenzen f1 und f2 in speziellen Beispielen gleich sind.

Im Beispiel c sind die Kreuzgitter in den Teilflächen 15 und im Flächenelement 12 im Azimut um 45° gegeneinander verdreht. Damit das gebeugte Licht in die Richtung 23 (Fig. 3) der Normalen zur Fläche 18 (Fig. 3), d.h. zum

4

Flächenelement 12 bzw. zur Teilfläche 15, abgelenkt wird, müssen für die lichtbeugenden Reliefstrukturen die Spatialfrequenzen f gemäss der Gleichung

$$\sin(\delta = 0°) - \sin(\alpha) = k \bullet \lambda \bullet f$$

gewählt werden, wobei $\alpha$ der Einfallswinkel der Lichtstrahlen 19 (Fig. 3), $\delta = 0°$ der Beugungswinkel des in die zur Fläche 18 (Fig. 3) normalen Richtung 23 (Fig. 3) gebeugten Lichts mit der Wellenlänge $\lambda$ und k die Beugungsordnung bezeichnen. Für einen Einfallswinkel $\alpha$ von 25° bis 30° und bei k = 1 liegt der Bereich der Spatialfrequenzen f zwischen 725 Linien/mm und 1025 Linien/mm;

bei k = 2 liegen die brauchbaren Spatialfrequenzen f zwischen 350 Linien/mm bis 550 Linien/mm, damit das gebeugte Licht in den Lichtempfänger 26 (Fig. 3) gelangt. Die Bereichsgrenzen sind durch die Farbempfindlichkeit des Lichtempfängers 26 vorbestimmt. Um allfällige Unebenheiten des Flächenmusters 11 auszugleichen, ist es von Vorteil die Spatialfrequenz f zu modulieren, wobei sich die Spatialfrequenz f zweckmässig über eine Periode von 0.2 mm bis 0.6 mm mit einem Hub von 5 Linien periodisch ändert.

Weniger kritisch bezüglich der Beleuchtungsverhältnisse im Farbkopierer sind die Beispiele 4d und 4e.

Im Beispiel 4d ist das Flächenelement 12 eine Spiegelfläche und die Teilfläche 15 weist eine Mattstruktur auf.

Beim Beispiel 4e sind eine Kreisfläche 41 mit einer Spiegelfläche und das Flächenelement 12 mit einer Mattstruktur belegt.

Die Teilflächen 15 in der länglichen Form sind empfindlich hinsichtlich der Abtastrichtung, da wegen der geringen Breite B der Teilflächen 15 schon bei einer Abweichung der Abtastrichtung von wenigen Winkelgraden aus der idealen Richtung die wirksame Länge der Teilflächen 15 zu kurz sein kann.

Für spezielle Effekte kann die Teilfläche 15 wie in der Figur 4d Kreuzform aufweisen oder durch eine Kreisfläche 41 (Fig. 4e) ersetzt sein. Der Farbkopierer registriert die Kreuzform bei einem Abtasten parallel zu den beiden Armen des Kreuzes, z.B. unter 45° und 135° zur Koordinatenrichtung x, während die Kreisfläche 41 unabhängig von der Ausrichtung des Flächenmusters 11 (Fig. 2) registriert wird. Nachdem sich abhängig von der Abtastrichtung ein unterschiedliches Erscheinungsbild ergeben soll, dürfen selbstverständlich nicht sämtliche Einheitszellen 40 mit kreuzförmigen (Figur 4d) oder kreisförmigen (Figur 4e) Teilflächen 15 versehen sein.

Sofern zumindest eine gewisse Abhängigkeit des sich bei Abtastung ergebenden Bildes von der Abtastrichtung gewünscht wird, müsste man anstelle der kreisförmigen Teilflächen 41 gemäss Figur 4e z.B. elliptische Teilflächen vorsehen, die dann eine entsprechende Asymmetrie aufweisen, um so zu erreichen, dass die Teilflächen 41 bei Abtastung in einer vorgegebenen Richtung sichtbar, in einer anderen Richtung jedoch nicht sichtbar sind. Entsprechend liesse sich auch hinsichtlich der kreuzförmigen Teilflächen 15 der Figur 4d eine Asymmetrie beispielsweise dadurch erreichen, dass verzerrte Kreuze oder Kreuze verwendet werden, deren Balken sich nicht im wesentlichen senkrecht schneiden.

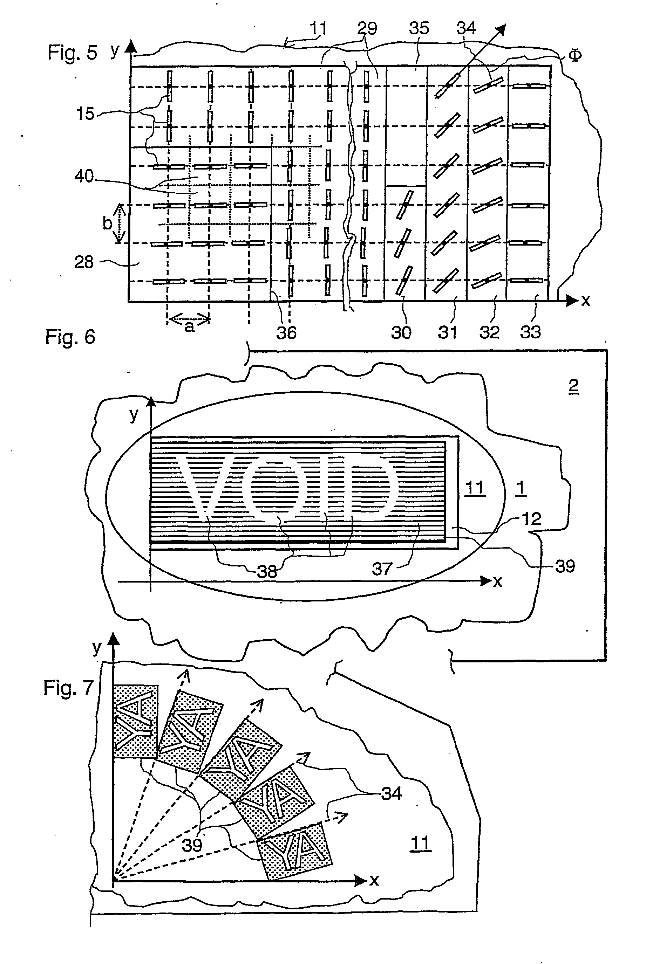

Die Figur 5 zeigt einen Ausschnitt des Flächenmusters 11 im ersten Quadrant eines Koordinatensystems x/y. Unabhängig vom Mosaik der Flächenelemente 12 (Fig. 2), 13 (Fig. 2), 14 (Fig. 2) ist ein Teil des Flächenmusters 11 in Bereiche 28 bis 33 eingeteilt. Die Bereiche 28 bis 33 sind in die aneinanderstossenden Einheitszellen 40 unterteilt, so dass die Schwerpunkte 16 (Fig. 2) der Teilflächen 15 einen regelmässigen Punktraster mit den Perioden a und b in den Koordinatenrichtungen x und y bilden. In einer andern Ausführung sind die Perioden gleich, d.h. a = b, wobei die Länge der Perioden a, b wenigstens die Länge L der Teilflächen 15 erreicht oder diese übertrifft. Jedoch hat der Punktraster in jedem Fall eine Auflösung von wenigstens 8 Punkten pro Millimeter. In jedem der Bereiche 28 bis 33 weisen die Teilflächen 15 eine Ausrichtung parallel zu einer Vorzugsrichtung 34 auf. Falls die Bereiche 28 bis 33 nicht durch Freiflächen 35 getrennt sind, unterscheidet sich jeder der Bereiche 28 bis 33 von den angrenzenden Bereichen 28 bis 33 durch seine Vorzugsrichtung 34. Im ersten Bereich 28 beträgt ein zwischen der Vorzugsrichtung 34 und der Koordinatenrichtung x gemessener Richtwinkel $\Phi = 0°$. Im angrenzenden zweiten Bereich 29 ist der Richtwinkel $\Phi = 90°$. Die innerhalb der Bereiche 28 bis 33 angeordneten Freiflächen 35 enthalten keine Teilflächen 15. Die Einteilung des Flächenmusters 11 in die Bereiche 28 bis 33 bzw. in die Bereiche 28 bis 33 und in die Freiflächen 35 ist durch die versteckte Information bestimmt.

In der Zeichnung der Figur 5 sind einige der Einheitszellen 40 mit einer Berandung aus gepunkteten Linien dargestellt. Damit das blosse Auge die Anordnung der Teilflächen 15 nicht erkennt, sind die Perioden so klein, dass auf einen Millimeter wenigstens 8 Einheitszellen 40 kommen. In einer anderen Ausführung weisen die Teilflächen 15 in wenigstens einem der Bereiche 28 bis 33 senkrecht zur Vorzugsrichtung 34 einen kleineren Abstand auf, wobei a bzw. b die Länge der Teilflächen 15 unterschreitet.

Wie oben erwähnt ist der Lichtempfänger 26 (Fig. 3) in eine endliche Anzahl von Photodetektoren 25 (Fig. 3) unterteilt. Quer zur Abtastrichtung wird das von den Photodetektoren 25 erfasste Abbild der Fläche 18 (Fig. 3) in einzelne Pixel aufgelöst. Sind die Teilflächen 15 im wesentlichen parallel zur Abtastrichtung ausgerichtet, werden sie wegen ihrer geringen Querabmessung, der Breite B, nicht registriert. Hingegen erfassen bei einer Ausrichtung der Teilflächen 15 im wesentlichen senkrecht zur Abtastrichtung die Lichtempfänger 26 die Teilflächen 15. Je nach Ausführung des Farbkopierers erscheint in der Kopie anstelle eines Abbilds der ausgerichteten Teilflächen 15 eine gestrichelte Linie oder eine ausgezogene Linie, die ein Artefakt des Farbkopierers ist.

Beispielsweise ist das Flächenmuster 11 so ausgerichtet, dass die Abtastrichtung mit der Koordinatenrichtung y zusammenfällt. Im ersten Bereich 28 sind die Teilflächen 15 senkrecht zur Abtastrichtung, d.h. parallel zur Koordinatenrichtung x, ausgerichtet. In der Farbkopie des in der Koordinatenrichtung y abgetasteten Sicherheitselements 1 (Fig. 1) entstehen zusätzlich zum Abbild des Flächenmusters 11 die Teilflächen 15 verbindende Linien oder Linienstücke, die der Beobachter in der Farbkopie als eine feine Schraffur parallel zur Koordinatenrichtung x des ersten Bereichs 28 erkennt. Im zweiten Bereich 29 ist die Vorzugsrichtung 34 der Teilflächen 15 parallel zur Abtastrichtung, so dass der Farbkopierer die Teilflächen 15 nicht registriert. In der Farbkopie sind neben dem Abbild des Flächenmusters 11 weder die Teilflächen 15 erkennbar, noch ist der zweite Bereich 29 schraffiert. Im normalen Betrachtungsabstand bewirkt die Schraffur im ersten Bereich 28 einen Grau- bzw. Farbkontrast gegenüber der Wiedergabe des zweiten Bereichs 29. Erfolgt hingegen das Abtasten des Sicherheitselements 1 in der Koordinatenrichtung x ist der zweite Bereich 29 in der Kopie parallel zur Koordinatenrichtung y schraffiert und der erste Bereich 28 nicht schraffiert. Grenzlinien 36 zwischen den Bereichen 28 bis 33 und der Freifläche 35 sind in der Zeichnung der Figur 5 nur aus darstellerischen Gründen eingezeichnet. In der Farbkopie sind die Freiflächen 35 unabhängig von der Abtastrichtung nie schraffiert.

Wie in der Figur 5 auf der rechten Seite gezeigt, sind die Bereiche 29 und 33 mit den Richtwinkeln $\Phi = 90°$ und 0° durch wenigstens einen weiteren Bereich 30 bis 32 getrennt, damit in den weiteren Bereichen 30 bis 32 sich der Richtwinkel $\Phi$ in Zwischenstufen ändert. Diese Anordnung weist den Vorteil auf, dass bei einer beliebigen Ausrichtung des Originals die versteckte Information in der Kopie sichtbar ist, da wenigstens einer der Bereiche fast parallel zum beleuchteten Streifen auf der Fläche 18 (Fig. 3) ausgerichtet ist und in der Kopie die Schraffur erscheint. Damit die nur in der Kopie sichtbare versteckte Information auffällig ist, umfassen die Bereiche 28 bis 33 und die allfälligen Freiflächen 35 minimale Abmessungen von wenigstens zwei Einheitszellen 40. Anstelle der Zwischenstufen sind auch Einheitszellen 40 mit kreuzförmigen Teilflächen 15 (Fig. 4d) oder mit Kreisflächen 41 (Fig. 4e) verwendbar.

In der Figur 6 weist eine Ausführung des Sicherheitselements 1 innerhalb des Flächenmusters 11 einen Hintergrundbereich 37 und Zeichenbereiche 38 auf. Der Hintergrundbereich 37 hat beispielsweise die Form einer Tafel 39 auf der die Zeichenbereiche 38 die versteckte Information bilden. Im Hintergrundbereich 37 sind die Teilflächen 15 (Fig. 1) parallel zur Koordinatenrichtung x angeordnet, so dass in der Farbkopie die Hintergrundfläche 37 schraffiert ist. In den Zeichenbereichen 38 sind die Teilflächen 15 um 90° gedreht, so dass dort keine Schraffur in der Kopie erscheint. Die Zeichenbereiche 38 heben sich in der Farbkopie durch ihre nicht schraffierte Fläche vom Hintergrundbereich 37 so ab, dass die versteckte Information von blosse Auge deutlich sichtbar ist.

In einem ersten Ausführungsbeispiel ist die optisch wirksame Struktur 4 (Fig. 1) im Flächenelement 12 ein Beugungsgitter. Die Teilflächen 15 weisen als optisch wirksame Strukturen 4 die Spiegelflächen 10 (Fig. 1) auf. Die Farbkopie zeigt als Hintergrund das vom Farbkopierer registrierte, von der Orientierung einer Vorlage, d.h. des Substrats 2 mit dem Flächenmuster 11 des Sicherheitselements 1, abhängige Muster. Bei der Abtastung der Vorlage im wesentlichen senkrecht zur Vorzugsrichtung 34 (Fig. 5) erscheinen im Hintergrundbereich 37 zusätzlich die schwarzen Schraffuren und die Zeichenbereiche 38 heben sich vom Hintergrundbereich 37 durch das Fehlen der Schraffuren ab. Im gezeigten Beispiel formen die Zeichenbereiche 38 die Information "VOID". Ist die Vorlage um 90° gedreht, wird die Vorlage im wesentlichen parallel zur Vorzugsrichtung 34 (Fig. 5) im Hintergrundbereich 37 abgetastet, so dass die Teilflächen 15 in den Zeichenbereichen 38 erfasst werden. In der Farbkopie ist die Information durch die schwarz schraffierten Zeichenbereiche 38 sichtbar. Das Flächenelement 12 bewirkt einen farbigen Hintergrund, wenn der Azimut $\theta$ (Fig. 3) des Beugungsgitters parallel zur Abtastrichtung ist. In anderen Orientierungen ist der Hintergrund wegen der an der lichtbeugenden Reliefstruktur gestreuten Lichtstrahlen 19 (Fig. 3) dunkelgrau. Der Ausdruck "im wesentlichen senkrecht oder parallel zur Vorzugsrichtung 34 bzw. zur Abtastrichtung" weist darauf hin, dass, abhängig von der Breite B der Teilfläche 15, der Spatialfrequenz f und dem Azimut, ungefähr $\pm$ 10° Abweichung zur angegebenen Richtung vom Farbkopierer toleriert wird.

In anderen Ausführungsbeispielen sind der Hintergrundbereich 37 und die Zeichenbereiche 38 der Tafel 39 aus Einheitszellen 40 (Fig. 5) eines der in den Figuren 4a bis 4e gezeigten Typs aufgebaut. Im Hintergrundbereich 37 ist der Richtwinkel $\Phi=0°$ (Fig. 5), wie dies in der Zeichnung der Figuren 4a-c gezeigt ist, $\Phi = 45°$ im Zwischenbereich 31 (Fig. 5) und $\Phi = 90°$ im Zeichenbereich 38. Die Wiedergabe der Einheitszellen 40 mit den einfachen linearen Beugungsgittern in der Farbkopie in Abhängigkeit von der Abtastrichtung des Farbkopierers zeigt vereinfacht die Tabelle 1. Die Abtastrichtung ist in Winkelgraden bezogen auf die Koordinatenrichtung y angegeben. Zur Festlegung der optischen Wirkung ist vorausgesetzt, dass in der Abtastrichtung 0° die Furchen der Beugungsgitter in allen Teilflächen 15 der Tafel 39 parallel zur Vorzugsrichtung 34 des Hintergrundbereichs 37 ausgerichtet sind. Beispielhaft sind auch die optischen Wirkungen der Zwischenbereiche 31 beschrieben. Im Fall 4a.1 weist bei der Abtastrichtung 90° das vom Farbkopierer registrierte Streulicht aus dem Flächenelement 12 und den Teilflächen 15 eine praktisch gleiche Intensität auf, so dass in der Kopie die versteckte Information nur in der Abtastrichtung 0° sichtbar ist.

In der Tabelle 1 ist mit farbig eine durch die Spatialfrequenz f vorbestimmte Farbe gemeint. Im Beispiel 4a.1 müssen die Farben des Hintergrundbereichs 37 und der Teilflächen 15 zusätzlich kontrastieren.

Tabelle 1: Die Wiedergabe der Einheitszellen 40 in der Farbkopie

| Beispiel | Abtastrichtung | Flächenelement 12 | Schraffur | | |
|---|---|---|---|---|---|
| | | | Hintergrundbereich 37 | Zwischenbereich 31 | Zeichenbereich 38 |
| Figur 4a | 0° | dunkelgrau | farbig | keine | keine |
| | 45° | dunkelgrau | keine | dunkelgrau | keine |
| | 90° | farbig | keine | keine | dunkelgrau |
| Figur 4a.1 | 0° | 1. Farbe | 2. Farbe | keine | keine |
| | 45° | dunkelgrau | keine | dunkelgrau | keine |
| | 90° | dunkelgrau | keine | keine | dunkelgrau |
| Figur 4b | 0° | farbig | schwarz | keine | keine |
| | 45° | dunkelgrau | keine | schwarz | keine |
| | 90° | farbig | keine | keine | schwarz |
| Figur 4c | 0° | dunkelgrau | farbig | keine | keine |
| | 45° | farbig | keine | farbig | keine |
| | 90° | dunkelgrau | keine | keine | farbig |
| | 135° | farbig | keine | keine | keine |
| Figur 4d | 0° | schwarz | weiss | keine | keine |
| | 45° | schwarz | keine | weiss | keine |
| | 90° | schwarz | keine | keine | weiss |
| | 135° | schwarz | keine | weiss | keine |
| Figur 4e | 0° | weiss | schwarz | keine | keine |
| | 45° | weiss | keine | schwarz | keine |
| | 90° | weiss | keine | keine | schwarz |

Andere als die in den Figuren 4a bis 4e gezeigten Kombinationen der optisch wirksamen Strukturen in den Flächenelementen 12 bis 14 (Fig. 2) und den Teilflächen 15 sind ebenfalls verwendbar; wichtig ist nur, dass in der Farbkopie die Schraffur vor dem Hintergrund der Flächenelemente 12 bis 14 (Fig. 2) erkennbar ist.

In der Figur 7 ist eine Vielzahl der Tafeln 39 auf dem Flächenmuster 11 so angeordnet, dass bei einer beliebigen Orientierung des Sicherheitselements 1 im Farbkopierer wenigstens eine der Tafeln 39 mit der versteckten Information beim Kopieren lesbar wiedergegeben wird. In dieser Ausführung weisen die in der Zeichnung der Figur 7 gestrichelt gezeichneten Vorzugsrichtungen 34 der Teilflächen 15 (Fig. 2) in jedem der Hintergrundbereiche 37 (Fig. 6) von einem gemeinsamen Punkt radial weg. Die Einheitszellen 40 jeder Tafel 39 sind auf die zugehörige Vorzugsrichtung 34 ausgerichtet.

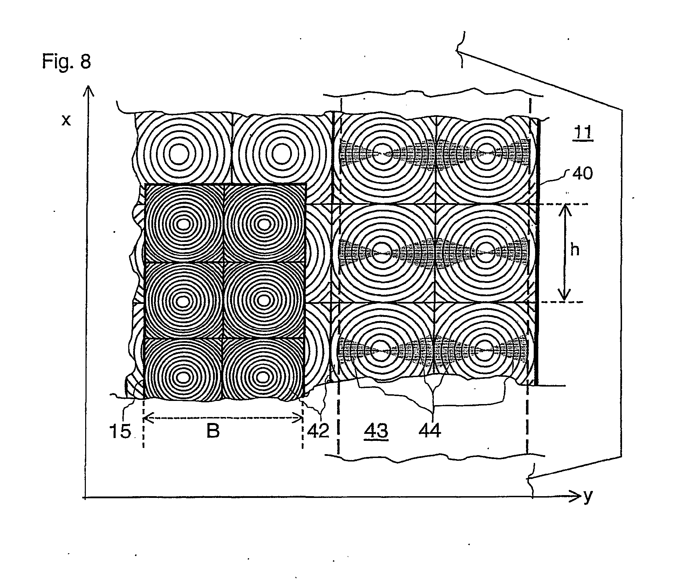

In der Figur 8 ist in einem Ausschnitt eine der Einheitszellen 40 und ein Teil ihrer Teilfläche 15 bei einer anderen Ausführung des Sicherheitselements 1 gezeigt. Die Teilflächen 15 und/oder die Flächenelemente 12 bis 14 (Fig. 2) der Bereiche 28 bis 33 (Fig. 5), 37 und 38 (Fig. 6) sind mit einer zirkularen lichtbeugenden Reliefstruktur belegt. Die Einheitszellen 40 und/oder die Teilflächen 15 sind in Flächenquadrate 42 eingeteilt. Jedes Flächenquadrat 42 weist ein ins Flächenquadrat 42 zentriertes, zirkulares Beugungsgitter auf, dessen kreisförmige Furchen konzentrisch angeordnet und mit vorbestimmter Spatialfrequenz f belegt sind, wobei Ecken der Flächenquadrate 42 mit entsprechenden Kreissegmenten der Furchen ausgefüllt sind. Die Spatialfrequenz f der Einheitszellen 40 und die der Teilflächen 15 unterscheiden sich, damit in der Farbkopie zwischen den Schraffuren und dem Hintergrund ein Farbkontrast vorhanden ist. Die Flächenquadrate 42 weisen eine Seitenlänge h mit einem Wert zwischen 20 $\mu$m und 100 $\mu$m auf. Die Teilflächen 15 besitzen eine geringe Breite B, so dass die Seitenlänge h in den Teilflächen 15 mit Vorteil am unteren Ende des oben angegebenen Bereichs für h und für die Einheitszelle 40 eher am oberen Ende des Bereichs für h liegt. Jedoch können die Flächenquadrate 42 der Einheitszellen 40 und der Teilflächen 15 gleiche Grösse aufweisen, wobei mit Vorteil als Mass für die Seitenlänge h die Breite B der Teilflächen 15 gewählt ist. Ein in der Zeichnung der Figur 8 gestrichelt dargestellter Flächenbereich 43 ist mit den Lichtstrahlen 19 (Fig. 3) beleuchtet. Der Flächenbereich wandert zum Abtasten schrittweise in der Koordinatenrichtung y über das Flächenmuster 11.

Unabhängig von der Orientierung der beleuchteten Fläche 43 werden die einfallenden Lichtstrahlen 19 immer in Segmenten 44 der zirkularen Beugungsgitter in Richtung des Lichtempfängers 26 (Fig. 3) gebeugt, wenn die Spatialfrequenz f des Beugungsgitters in den oben beschriebenen Bereichen liegt. Das Segment 44 ist radial durch zwei Gittervektoren, die Radien des zirkularen Beugungsgitters sind, im Flächenquadrat 42 begrenzt. Da die Beugungsebene 22 (Fig. 3) parallel zur Abtastrichtung ist, vergrössert sich mit zunehmendem Winkel zwischen dem Gittervektor und der Beugungsebene 22 der wirksame Furchenabstand, so dass die Farbe des gebeugten Lichts aus den Segmenten nicht einheitlich ist und Farbsäume gegen die radiale Berandung der Segmente 44 auftreten. In der Kopie sind die Segmente 44 und die übrigen Flächenanteile der beleuchteten Flächenquadrate 42 nicht aufgelöst. Die Wiedergabe des gebeugten Lichts erfolgt in einer Mischfarbe, deren Hauptanteil auf der durch die Spatialfrequenz f festgelegten Wellenlänge $\lambda$ basiert.

Anstelle der zirkularen Beugungsgitter mit äquidistanten Furchen sind in anderen Ausführungen auch Reliefstrukturen von Fresnellinsen als optisch wirksame Struktur 4 (Fig. 1) verwendbar. Ihre Fokussiereigenschaften sind derart optimiert, dass möglichst viel weisses Licht in den Lichtempfänger 26 (Fig. 3) reflektiert wird.

Die Verwendung solcher zirkularer Beugungsgitter für die Einheitszellen 40 und/oder die Teilflächen 15 bzw. die Kreisflächen 41 (Fig. 4e) weist den Vorteil auf, dass in der Kopie der Hintergrund der Tafel 39 unabhängig von der Abtastrichtung und bei entsprechender Ausrichtung die durch die Teilflächen 15 erzeugten Schraffuren immer in der Mischfarbe erscheinen.

In weiteren Ausführungen des Sicherheitselementes 1 nehmen anstelle der zirkulären Beugungsgitter Spiegelflächen oder Mattstrukturen die Fläche der Teilflächen 15 ein.

## Patentansprüche

1. Sicherheitselement (1) mit einem reflektierenden Flächenmuster (11) gebildet aus einem Mosaik von Flächenelementen (12; 13; 14) mit optisch wirksamen Strukturen (4) eingebettet in einem Schichtverbund (3) aus Kunststoff, wobei das Flächenmuster (11) optisch variabel ist, weil visuell erkennbare Bilder des Flächenmusters (11) abhängig von vorbestimmten Beobachtungsrichtungen durch die optische Wirkung des Flächenmusters (11) ändern und von den Flächenelementen (12; 13; 14) erzeugt sind, und die Flächenelemente (12; 13; 14) lichtbeugende Reliefstrukturen, lichtstreuende Reliefstrukturen oder Spiegelflächen (10) als optisch wirksame Strukturen (4) aufweisen,
   **dadurch gekennzeichnet,**
   **dass** unabhängig vom Mosaik der Flächenelemente (12; 13; 14) wenigstens ein Teil des Flächenmusters (11) eine Einteilung in Bereiche (28 bis 33; 37; 38) durch eine Information bestimmt ist, dass unabhängig vom Flächenmuster (11) in den Bereichen (28 bis 33; 37; 38) zusätzlich eine Vielzahl von identischen Teilflächen (15) von länglicher Form und mit einer optisch wirksamen Struktur (4) eingefügt sind, wobei die von den Teilflächen (15) nicht eingenommenen Flächenanteile einen Anteil des Flächenmusters (11) enthält,
   **dass** die optisch wirksame Struktur (4) der Teilflächen (15) sich von den optisch wirksamen Strukturen (4) der umgebenden Flächenelementen (12; 13; 14) des Mosaiks unterscheidet
   **dass** die Vielzahl der Teilflächen (15) mit ihren Schwerpunkten (16) regelmässig so angeordnet sind, dass die Schwerpunkte (16) einen zweidimensionalen Punktraster mit mehr als 5 Punkten pro mm bilden und die Teilflächen (15) eine grösste Abmessung von weniger als 0.2 mm und ein Längen- zu Breitenverhältnis von wenigstens 3:1 aufweisen und von blossem Auge nicht sichtbar sind,
   **dass** in jedem der Bereiche (28 bis 33; 37; 38) die Teilflächen (15) im Punktraster parallel zu einer Vorzugsrichtung (34) ausgerichtet sind und dass die Bereiche (28 bis 33; 37; 38) die durch die Vorzugsrichtung (34) bestimmte, von blossem Auge nicht wahrnehmbare versteckte Information bilden,
   **dass** in einer mittels eines digitalen Farbkopierers erzeugten Farbkopie des Flächenmusters (11) nur in den Bereichen (28 bis 22; 37; 38) die versteckte Information mittels Schraffuren als Artefakt vor dem Hintergrund des von den Flächenelementen (12; 13; 14) erzeugten Bilds mit dem blossen Auge deutlich erkennbar ist.

2. Sicherheitselement nach Anspruch 1,
   **dadurch gekennzeichnet,**
   **dass** die Bereiche (28 bis 33; 37; 38) in aneinanderstossende Einheitszellen (40) des Punktrasters in Rechteck - oder Sechseckform unterteilt sind, wobei der Schwerpunkt (16) der Teilfläche (15) mit dem Diagonalenschnittpunkt der Einheitszelle (40) zusammenfällt.

3. Sicherheitselement nach Anspruch 2,
   **dadurch gekennzeichnet,**
   **dass** in den Einheitszellen (40) zwei Teilflächen (15) kreuzförmig angeordnet sind.

4. Sicherheitselement nach Anspruch 1 bis 3,
   **dadurch gekennzeichnet,**

**dass** die Bereiche (28 bis 33; 37; 38) benachbart sind und dass sich die benachbarten Bereiche (28 bis 33; 37; 38) in der Vorzugsrichtung (34) der Teilflächen (15) unterscheiden.

5. Sicherheitselement nach einem der Ansprüche 1 bis 4,
**dadurch gekennzeichnet,**
**dass** in den Teilflächen (15) ebene Spiegelflächen (10) und in den reflektierenden Flächenelementen (12; 13; 14) mikroskopisch feine, Licht streuende oder beugende Strukturen vorgesehen sind.

6. Sicherheitselement nach einem der Ansprüche 1 bis 4,
**dadurch gekennzeichnet,**
**dass** in den Teilflächen (15) mikroskopisch feine, Licht streuende oder beugende Strukturen und in den Flächenelementen (12; 13; 14) ebene Spiegelflächen (10) vorgesehen sind.

7. Sicherheitselement nach einem der Ansprüche 1 bis 4,
**dadurch gekennzeichnet,**
**dass** die optisch wirksamen Reliefstrukturen (4) in den Teilflächen (15) und in den Flächenelementen (12; 13; 14) Gitterstrukturen sind, wobei sich die Gitterstruktur der Teilflächen (15) von den Gitterstrukturen der Flächenelemente (12; 13; 14) wenigstens im Azimut und/oder in der Spatialfrequenz (f) unterscheiden.

8. Sicherheitselement nach einem der Ansprüche 5 bis 7,
**dadurch gekennzeichnet,**
**dass** die mikroskopisch feine, lichtbeugende Strukturen lineare Gitterstrukturen sind.

9. Sicherheitselement nach einem der Ansprüche 5 bis 7,
**dadurch gekennzeichnet,**
**dass** die mikroskopisch feine, lichtbeugende Strukturen Kreuzgitterstrukturen mit vorbestimmten Spatialfrequenzen (f1; f2) sind.

10. Sicherheitselement nach Anspruch 5 oder 7,
**dadurch gekennzeichnet,**
**dass** in den Bereichen (28 bis 33; 37; 38) die Einheitszellen (40) und/oder die Teilflächen (15) in aneinanderstossende Flächenquadrate (42) mit einer Seitenlänge von weniger als 100 Mikrometern eingeteilt sind,
**dass** in jedes Flächenquadrat (42) ein ins Flächenquadrat (42) zentriertes zirkulares Beugungsgitter abgeformt ist, dessen kreisförmige Furchen konzentrisch angeordnet und eine Spatialfrequenz (f) aufweisen und wobei Ecken der Flächenquadrate (42) mit entsprechenden Kreissegmenten der Furchen ausgefüllt sind und
**dass** sich die Gitterstruktur in den Flächenquadraten (42) wiederholt.

11. Sicherheitselement nach Anspruch 10,
**dadurch gekennzeichnet,**
**dass** die Gitterstrukturen als reflektierende Fresnellinsen ausgebildet sind.

12. Sicherheitselement nach einem der Ansprüche 8 bis 10,
**dadurch gekennzeichnet,**
**dass** die Spatialfrequenzen (f; f1, f2) der Gitterstrukturen aus den Bereichen 350 bis 550 Linien pro Millimeter bzw. 725 bis 1025 Linien pro mm gewählt sind.

13. Sicherheitselement nach Anspruch 5 oder 6,
**dadurch gekennzeichnet,**
**dass** die mikroskopisch feine, einfallende Lichtstrahlen (19) streuende Strukturen Mattstrukturen sind.

14. Sicherheitselement nach einem der Ansprüche 1 bis 13,
**dadurch gekennzeichnet,**
**dass** einer der Bereiche (28 bis 33) die Funktion eines Hintergrundsbereichs (37) erfüllt und die übrigen, innerhalb des Hintergrundbereichs (37) angeordneten Bereiche (28 bis 33) die Funktion von Zeichenbereichen (38) besitzen und die Form von grafischen bzw. alphanumerischen Zeichen aufweisen und dass die Vorzugsrichtung (34) der Teilflächen (15) im Hintergrundbereich (37) und die Vorzugsrichtung (34) der Teilflächen (15) in den Zeichenbereichen (38) senkrecht zueinander ausgerichtet sind.

**15.** Sicherheitselement nach Anspruch 14,
**dadurch gekennzeichnet,**
**dass** die Bereiche (28 bis 33) die Funktion eines Hintergrundsbereichs (37) erfüllen, dass innerhalb der Bereiche (28 bis 33) angeordnete Freiflächen (35) keine Teilflächen (15) enthalten und innerhalb des Hintergrundbereichs (37) die Funktion von Zeichenbereichen (38) besitzen, und dass die Zeichenbereiche (38) die Form von grafischen bzw. alphanumerischen Zeichen aufweisen.

**16.** Sicherheitselement nach Anspruch 14 oder 15,
**dadurch gekennzeichnet,**
**dass** eine Vielzahl der Hintergrundbereiche (37) so angeordnet sind, dass die Vorzugsrichtungen (34) der Teilflächen (15) der Hintergrundbereiche (37) von einem gemeinsamen Punkt aus radial wegweisen.

**17.** Sicherheitselement nach Anspruch 1,
**dadurch gekennzeichnet,**
**dass** der Flächendeckungsgrad der Teilflächen (15) in den Bereichen (28 bis 33; 37; 38) 20 % nicht übersteigt.

**Claims**

**1.** Security element (1) having a reflective surface pattern (11) formed from a mosaic of surface elements (12; 13; 14) having optically active structures (4) embedded in a layer composite (3) made from plastic, wherein the surface pattern (11) is optically variable, since visually detectable images of the surface pattern (11) change depending on predetermined observation directions due to the optical effect of the surface pattern (11) and are generated by the surface elements (12; 13; 14), and the surface elements (12; 13; 14) have light-diffracting relief structures, light-scattering relief structures or mirror surfaces (10) as optically active structures (4),
**characterised in that**,
independently from the mosaic of surface elements (12; 13; 14), at least one part of the surface pattern (11) is determined by a division into regions (28 to 33; 37; 38) by a piece of information, **in that**, independently from the surface pattern (11) in the regions (28 to 33; 37; 38), a plurality of identical partial surfaces (15) with an elongated shape and having an optically active structure (4) are additionally introduced, wherein the surface proportions that are not taken up by the partial surfaces (15) contain a proportion of the surface pattern (11),
**in that** the optically active structure (4) of the partial surfaces (15) differs from the optically active structures (4) of the surrounding surface elements (12; 13; 14) of the mosaic,
**in that** the plurality of partial surfaces (15) are arranged with such regularity with their focal points (16) that the focal points (16) form a two-dimensional dot matrix having more than 5 dots per mm, and the partial surfaces (15) have a largest dimension of less than 0.2mm and a length-to-width ratio of at least 3:1 and are invisible to the naked eye,
**in that**, in each of the regions (28 to 33; 37; 38), the partial surfaces (15) in the dot matrix are aligned in parallel to a preferred direction (34), and **in that** the regions (28 to 33; 37; 38) form the hidden information that is determined by the preferred direction (34) and cannot be perceived by the naked eye,
**in that**, only in the regions (28 to 33; 37; 38), in a colour copy of the surface pattern (11) produced by means of a digital colour photocopier, the hidden information can be clearly detected with the naked eye by means of hatchings as artefacts in front of the background of the image generated by the surface elements (12; 13; 14).

**2.** Security element according to claim 1,
**characterised in that**,
the regions (28 to 33; 37; 38) are subdivided into bordering unit cells (40) of the dot matrix in a rectangular or hexagonal shape, wherein the focal point (16) of the partial surface (15) coincides with the diagonal point of intersection of the unit cell (40).

**3.** Security element according to claim 2,
**characterised in that**,
two partial surfaces (15) are arranged in a cross shape in the unit cells (40).

**4.** Security element according to claims 1 to 3,
**characterised in that**,
the regions (28 to 33; 37; 38) are adjacent and the adjacent regions (28 to 33; 37; 38) differ in the preferred direction (34) of the partial surfaces (15).

**5.** Security element according to one of claims 1 to 4,
**characterised in that**,
flat mirror surfaces (10) are provided in the partial surfaces (15) and microscopically fine, light-scattering or light-diffracting structures are provided in the reflective surface elements (12; 13; 14).

**6.** Security element according to one of claims 1 to 4,
**characterised in that**,
microscopically fine, light-scattering or light-diffracting structures are provided in the partial surfaces (15) and flat mirror surfaces (10) are provided in the surface elements (12; 13; 14).

**7.** Security element according to one of claims 1 to 4,
**characterised in that**,
the optically active relief structures (4) in the partial surfaces (15) and in the surface elements (12; 13; 14) are grating structures, wherein the grating structures of the partial surfaces (15) differ from the grating structures of the surface elements (12; 13; 14) at least in terms of their azimuth and/or spatial frequency (f).

**8.** Security element according to one of claims 5 to 7,
**characterised in that**,
the microscopically fine, light-diffracting structures are linear grating structures.

**9.** Security element according to one of claims 5 to 7,
**characterised in that**,
the microscopically fine, light-diffracting structures are cross grating structures having predetermined spatial frequencies (f1; f2).

**10.** Security element according to claim 5 or 7,
**characterised in that**,
in the regions (28 to 33; 37; 38), the unit cells (40) and/or the partial surfaces (15) are divided into bordering surface squares (42) having a side length of less than 100 micrometres,
a circular diffraction grating that is centred into the surface square (42) is moulded into each surface square (42), the circular grooves of which are arranged concentrically and have a spatial frequency (f), and wherein corners of the surface square (42) are filled with corresponding circular segments of the grooves, and
the grating structure is repeated in the surface squares (42).

**11.** Security element according to claim 10,
**characterised in that**,
the grating structures are designed as reflective Fresnel lenses.

**12.** Security element according to one of claims 8 to 10,
**characterised in that**,
the spatial frequencies (f; f1, f2) of the grating structures are selected from the ranges of 350 to 550 lines per millimetre and 725 to 1025 lines per mm.

**13.** Security element according to claim 5 or 6,
**characterised in that**,
the microscopically fine, incident beams of light (19) are scattering matt structures.

**14.** Security element according to one of claims 1 to 13,
**characterised in that**,
one of the regions (28 to 33) fulfils the function of a background region (37) and the remaining regions (28 to 33) arranged within the background region (37) have the function of character regions (38) and have the shape of graphical or alphanumerical characters, and **in that** the preferred direction (34) of the partial surfaces (15) in the background region (37) and the preferred direction (34) of the partial surfaces (15) in the character regions (38) are aligned perpendicular to each other.

**15.** Security element according to claim 14,
**characterised in that**,
the regions (28 to 33) fulfil the function of a background region (37), free surfaces (35) arranged within the regions (28 to 33) contain no partial surfaces (15) and, within the background region (37), have the function of character regions (38), and **in that** the character regions (38) have the form of graphical or alphanumerical characters.

**16.** Security element according to claim 14 or 15,
**characterised in that**,
a plurality of the background regions (37) are arranged in such a way that the preferred directions (34) of the partial surfaces (15) of the background regions (37) point radially outwards from a mutual point.

**17.** Security element according to claim 1,
**characterised in that**,
the degree of surface coverage of the partial surfaces (15) in the regions (28 to 33; 37; 38) does not exceed 20%.

**Revendications**

**1.** Elément de sécurité (1) doté d'un motif de surface (11) réfléchissant qui est formé d'une mosaïque d'éléments de surface (12 ; 13 ; 14) ayant des structures à effet optique (4) et qui est inséré dans un composite stratifié (3) en matière synthétique, le motif de surface (11) étant optiquement variable parce que des images visuellement reconnaissables du motif de surface (11) se modifient par l'effet optique du motif de surface (11) en fonction de directions d'observation prédéfinies et sont produites par les éléments de surface (12 ; 13 ; 14), et les éléments de surface (12 ; 13 ; 14) présentant des structures en relief diffractant la lumière, des structures en relief dispersant la lumière ou des surfaces réfléchissantes (10) en tant que structures à effet optique (4),
**caractérisé**
**en ce que**, indépendamment de la mosaïque des éléments de surface (12 ; 13 ; 14), au moins une partie du motif de surface (11) est une répartition en des zones (28 à 33 ; 37 ; 38) déterminée par une information, en ce que, indépendamment du motif de surface (11), une pluralité de surfaces partielles (15) identiques de forme allongée et avec une structure à effet optique (4) sont introduites en plus dans les zones (28 à 33 ; 37 ; 38), les parties de surface non occupées par les surfaces partielles (15) contenant une partie du motif de surface (11),
**en ce que** la structure à effet optique (4) des surfaces partielles (15) se différencie de la structure à effet optique (4) des éléments de surface (12 ; 13 ; 14) environnants de la mosaïque,
**en ce que** la pluralité des surfaces partielles (15) avec leur barycentre (16) sont disposées régulièrement de sorte que les barycentres (16) forment une grille de points bidimensionnelle avec plus de 5 points par mm et les surfaces partielles (15) présentent une dimension maximale inférieure à 0,2 mm et un rapport longueur sur largeur d'au moins 3/1 et ne sont pas visibles à l'oeil nu,
**en ce que**, dans chacune des zones (28 à 33 ; 37 ; 38), les surfaces partielles (15) sont orientées dans la grille de points parallèlement à une direction de préférence (34) et en ce que les zones (28 à 33 ; 37 ; 38) forment les informations cachées, non perceptibles à l'oeil nu et déterminées par la direction de préférence (34),
**en ce que**, sur une copie en couleur du motif de surface (11) produite au moyen d'un copieur en couleur numérique, uniquement dans les zones (28 à 22 ; 37 ; 38), l'information cachée est clairement reconnaissable à l'oeil nu au moyen de hachures en tant qu'artefact devant l'arrière-plan de l'image produite par les éléments de surface (12 ; 13 ; 14).

**2.** Elément de sécurité selon la revendication 1,
**Caractérisé en ce que**
les zones (28 à 33 ;37; 38) sont réparties dans des cellules unitaires (40) de la grille de points sous une forme rectangulaire ou hexagonale, le barycentre (16) de la surface partielle (15) coïncidant avec le point d'intersection des diagonales des cellules unitaires (40).

**3.** Elément de sécurité selon la revendication 2,
**caractérisé en ce que**
deux surfaces partielles (15) sont disposées en forme de croix dans les cellules unitaires (40).

**4.** Elément de sécurité selon les revendications 1 à 3,
**caractérisé en ce que**
les zones (28 à 33 ; 37 ; 38) sont voisines et **en ce que** les zones voisines (28 à 33; 37 ; 38) se coupent dans la direction de préférence (34) des surfaces partielles (15).

**5.** Elément de sécurité selon l'une quelconque des revendications 1 à 4,

**caractérisé en ce que**

des surfaces réfléchissantes planes (10) sont prévues dans les surfaces partielles (15) et des structures, diffusant ou diffractant la lumière, d'une finesse microscopique sont prévues dans les éléments de surface réfléchissants (12 ; 13 ; 14).

6. Elément de sécurité selon l'une quelconque des revendications 1 à 4,
**caractérisé en ce que**
des structures diffusant ou diffractant la lumière, d'une finesse microscopique, sont prévues dans les surfaces partielles (15) et des surfaces réfléchissantes planes (10) sont prévues dans les éléments de surface (12 ; 13 ; 14).

7. Elément de sécurité selon l'une quelconque des revendications 1 à 4,
**caractérisé en ce que**
les structures en relief à effet optique (4) sont des structures de grille dans les surfaces partielles (15) et dans les éléments de surface (12 ; 13 ; 14), la structure de grille des surfaces partielles (15) se différenciant des structures de grille des éléments de surface (12 ; 13 ; 14) au moins dans l'azimut et/ou dans la fréquence spatiale (f).

8. Elément de sécurité selon l'une quelconque des revendications 5 à 7,
**caractérisé en ce que**
les structures diffractant la lumière, d'une finesse microscopique, sont des structures de grille linéaires.

9. Elément de sécurité selon l'une quelconque des revendications 5 à 7,
**caractérisé en ce que**
les structures diffractant la lumière, d'une finesse microscopique, sont des structures de grille croisées avec des fréquences spatiales prédéfinies ($f1$; $f2$).

10. Elément de sécurité selon la revendication 5 ou 7,
**caractérisé en ce que**
dans les zones (28 à 33 ; 37 ; 38), les cellules unitaires (40) et/ou les surfaces partielles (15) sont réparties dans des carrés de surface adjacents (42) ayant une longueur de côté inférieure à 100 micromètres,
**en ce que**, dans chaque carré de surface (42), est formée une grille de diffraction circulaire, centrée dans le carré de surface (42), dont des sillons circulaires sont disposés de manière concentrique et présentent une fréquence spatiale (f), et des angles des carrés de surface (42) étant remplis avec des segments de cercle correspondants des sillons, et
**en ce que** la structure de grille se répète dans les carrés de surface (42).

11. Elément de sécurité selon la revendication 10,
**caractérisé en ce que**
les structures de grille sont conçues en tant que lentilles de Fresnel réfléchissantes.

12. Elément de sécurité selon l'une quelconque des revendications 8 à 10,
**caractérisé en ce que**
les fréquences spatiales (f; f1, f2) des structures de grille sont choisies dans les plages de 350 à 550 lignes par millimètre ou de 725 à 1025 lignes par millimètre.

13. Elément de sécurité selon la revendication 5 ou 6,
**caractérisé en ce que**
les structures dispersant les rayons lumineux incidents, d'une finesse microscopique (19), sont des structures mates.

14. Elément de sécurité selon l'une quelconque des revendications 1 à 13,
**caractérisé en ce que**
une des zones (28 à 33) remplit la fonction d'une zone d'arrière-plan (37) et les autres zones (28 à 33) disposées à l'intérieur de la zone d'arrière-plan (37) possèdent la fonction de zones de caractère (38) et présentent la forme de caractères graphiques ou alphanumériques et **en ce que** la direction de préférence (34) des surfaces partielles (15) dans la zone d'arrière-plan (37) et la direction de préférence (34) des surfaces partielles (15) dans les zones de caractères (38) sont orientées perpendiculairement l'une à l'autre.

15. Elément de sécurité selon la revendication 14,
**caractérisé en ce que**

les zones (28 à 33) remplissent la fonction d'une zone d'arrière-plan (37), **en ce que** des surfaces libres (35) disposées à l'intérieur des zones (28 à 33) ne contiennent pas de surfaces partielles (15) et possèdent à l'intérieur de la zone d'arrière-plan (37) la fonction de zones de caractère (38), et
**en ce que** les zones de caractère (38) présentent la forme de caractères graphiques ou alphanumériques.

16. Elément de sécurité selon la revendication 14 ou 15,
   **caractérisé en ce que**
   une pluralité des zones d'arrière-plan (37) sont disposées de sorte que les directions de préférence (34) des surfaces partielles (15) des zones d'arrière-plan (37) partent radialement d'un point commun.

17. Elément de sécurité selon la revendication 1,
   **caractérisé en ce que**
   le taux de couverture de surface pour les surfaces partielles (15) ne dépasse pas 20 % dans les zones (28 à 33 ; 37 ; 38).

Fig. 1

Fig. 2

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0105099 B1
- EP 0330738 B1
- EP 0375833 B1
- EP 0201323 B1
- EP 0490457 B1

**In der Beschreibung aufgeführte Nicht-Patentliteratur**

- Optical Document Security. 127-148